# EUROPEAN PATENT APPLICATION

(11) **EP 2 094 014 A1**
(43) Date of publication of application: **26.08.2009**
(21) Application number: 08250611.4
(22) Date of filing: 21.02.2008
(51) Int. Cl.: H04N 7/24

(54) **Video streaming**

(71) Applicant: British Telecommunications Public Limited Company, London, Greater London EC1A 7AJ (GB)
(72) Inventor: The designation of the inventor has not yet been filed
(74) Representative: Nash, Roger William

(57) **Abstract**

From video source material, one generates a first coded signal using a combination of inter-frame and intra-frame coding, in which intra-coded pictures are forced to occur at least once in each of successive first set time periods. A second coded version of the same source has intra-coded pictures occurring wholly or mainly at times determined by recognition of scene changes in the video source material.

In response to a command for streaming, or resumption of streaming, of said video source material, (perhaps following trick-play), firstly the first coded signal is streamed, commencing with an intra-coded picture. Then, at a point coinciding with an intra-coded picture of the second coded signal, one ceases streaming of the first coded signal and instead streams the second coded signal, commencing with that intra-coded picture.

## Description

The present invention is concerned with video streaming.

Video compression techniques developed over the last 20 years have been based on motion compensated transform coding. The basic idea is to encode one image, and use this image as a prediction for the next image. Subtracting the prediction from the source picture, thus removing temporal redundancy, leaves a prediction residual which is then coded with a block based transform coding technique.

The source picture is usually divided into 16x16 regions called macroblocks. The encoder searches one or more previously encoded and stored pictures for a good match or prediction for the current macroblock. The displacement between the macroblock in the reference picture co-located with the current macroblock and the region of pixels used for prediction of the current macroblock is known as a motion vector.

An alternative to using prediction from a previous picture, known as inter coding, to encode a macroblock, is to encode the macroblock without reference to a previously encoded picture. This is called intra coding. In early compression standards this was achieved simply by missing the subtractor and transforming and quantising the source picture directly. In later standards, various forms of spatial prediction, using already coded pixels of the current picture, are used to remove redundancy from the source macroblock before the transform and quantisation processes.

The difference between the source picture and the prediction, known as the prediction error, or prediction residual, is usually transformed to the frequency domain using a block based transform, and is then quantised with a scalar quantiser, and the resulting quantised coefficients are entropy coded. A range of scalar quantisers is usually available to allow the distortion introduced by the quantisation process to be traded off against the number of bits produced by the entropy coding in order to meet some predetermined bit rate constraint, such as to achieve a constant bit rate for transmission over a constant bit rate network.

A number of international standards for video coding and decoding have been promulgated, notably the H series of standards from the ITU and the ISO/IEC MPEG series.

It has already been mentioned that a macroblock may be coded without reference to a previously coded frame - typically when a previously coded macroblock suitable for prediction cannot be found; also, such intra-coding may be periodically forced, to limit propagation of transmission errors. It is also possible to code an entire frame without reference to a previously coded frame - a so-called intra-frame or I-frame. Naturally the first frame to be coded has to be of this type. It is not in principle necessary to use I-frames after that; however, some coders contain a scene change detector which triggers the generation of an I-frame whenever a scene change is detected. Also some coders insert regular I-frames at intervals, typically so as to permit decoding from some point other that the beginning of the coded sequence. For example, UK digital broadcast television currently inserts intra frames at least once a second and often twice a second. Coded video is referred to often as having 1 second (or 0.5 sec) GOPs (Group of pictures) with "sync frames" at start of each GOP. This is so that anyone switching in to a digital broadcast only has to wait the shortest possible time before a decoder can start displaying the video. Intra frames are expensive to code in terms of bits compared to other picture types so there is a trade-off between coding efficiency and random access functionality.

Some video-on-demand (VOD) systems also use this 1 sec GOP structure for the coded film and TV assets for a similar reason, to facilitate return from trick-play operation. The intra frames are pulled out by an import process and separately streamed at various rates to give trickplay modes such as rewind and fast forward; then when the viewer exits from trickplay he can go straight back in to the video asset at the required point.

One problem with the frequent regular insertion of intra-frames where bandwidth is limited is that the intra frames need to be coded at a lower visual quality relative to the surrounding frames just to stay within the bit budget. The resulting degradation in picture quality is particularly apparent with football content. The result is a pulsing artifact every sync frame (every second) that is very noticeable on the long grass shots in the football games.

According to the present invention there is provided a method of streaming video source material comprising
generating from said video source material a first coded signal using a combination of inter-frame and intra-frame coding, the first signal having intra-coded pictures interspersed by inter-coded pictures, with the intra-coded pictures being forced to occur at least once in each of successive first set time periods of predetermined duration;
generating from said video source material a second coded signal using a combination of inter-frame and intra-frame coding, the second signal having intra-coded pictures interspersed by inter-coded pictures, with the intra-coded pictures occurring wholly or mainly at times determined by recognition of scene changes in the video source material; in response to a command for streaming, or resumption of streaming, of said video source material:
(a) streaming the first coded signal, commencing with an intra-coded picture;
(b) at a point coinciding with an intra-coded picture of the second coded signal, ceasing streaming of the first coded signal and instead streaming the second coded signal, commencing with that intra-coded picture.

Other aspect of the invention are defined in the claims.

Some embodiments of the invention will now be described, by way of example, with reference to the accompanying drawings, in which:
Figure 1 is a block diagram of a first form of video coder, used in embodiments of the invention;
Figure 2 is a block diagram of a second form of video coder, used in embodiments of the invention; and
Figure 3 is a block diagram of a video streaming server.

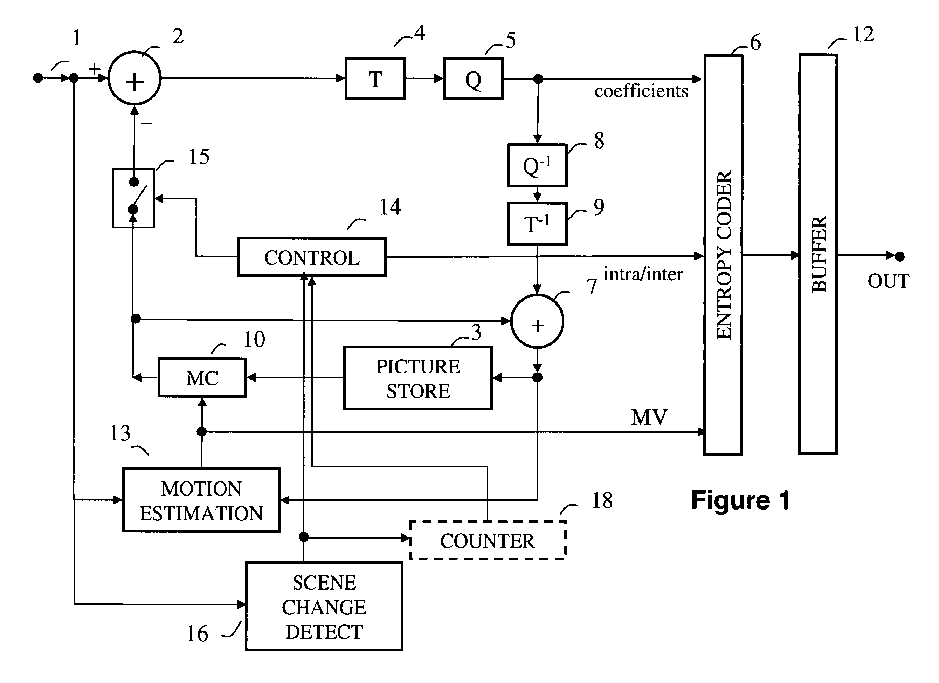

Figure 1 shows a video coder. Video signals (commonly in digital form) are received at an input 1. A subtractor 2 forms the difference between the input and a predicted signal from a predictor buffer 3 which is then further coded. The coding performed here may include transform coding 4, thresholding (to suppress transmission of zero or minor differences), quantisation 5, and/or variable length coding 6, for example. The input to the predictor store 3 is the sum, formed in an adder 7, of the prediction and the coded difference signal decoded at 8, 9 (so that loss of information in the coding and decoding process is included in the predictor loop). The inverse quantiser 8, inverse transform 9 and adder 7, along with the store 3 and motion compensation 10 form a local decoder.

Buffering may be provided at the encoder output (12) and decoder input (not shown) to permit transmission over a constant bit-rate channel. A motion estimator 13 is also included. This compares the frame of the picture being coded with the predictor frame: for each block of the current frame (into which the picture is regarded as divided) it identifies that region of the previous frame which the block most closely resembles. The vector difference in position between the identified region and the block in question is termed a motion vector (since it usually represents motion of an object within the scene depicted by the television picture) and is applied to the motion compensation unit 10 which serves to shift the identified region of the previous frame into the position of the relevant block in the current frame, thereby producing a better prediction. This results in the differences formed by the subtractor 2 being, on average, smaller and permits the coding at 4, 5 to encode the picture using a lower bit rate than would otherwise be the case.

This coder does not always use inter-frame coding, however. Some standards provide that the coder makes, for each macroblock, a decision as to whether that macroblock is to be coded using motion-compensated inter-frame differential coding, or whether it is more economical on bits to use intra-frame coding for that macroblock. This decision is taken by a control unit 14: if intra-frame coding is to be used, the "previous picture" prediction is no longer fed to the subtractor. This is indicated schematically in Figure 1 by a switch 15. The decision is also signalled to the decoder where it controls a similar switch. Intra coding can, instead of simply coding up the actual pixel values, invoke intra-frame differential coding using predictions from previously decoded pixels within the same picture. This is not however shown in the drawing.

The coder of Figure 1 operates in a first, or free, mode in which a scene change detector 16 recognises scene changes and responds by overriding the operation of the switch 15 to force the generation of an intra-frame.

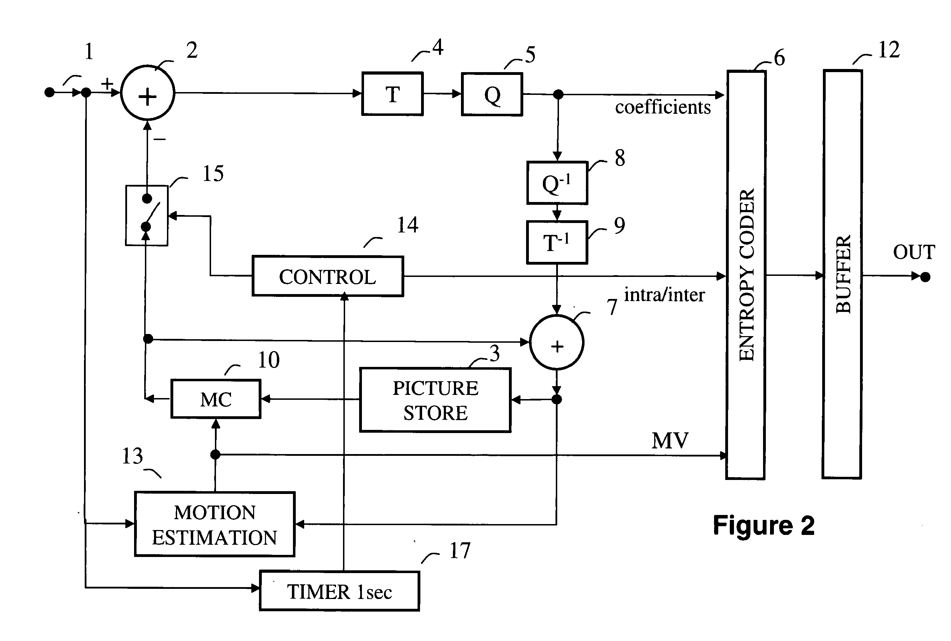

Figure 2 shows a second, fixed mode, coder which is of identical structure to that of Figure 1 except that, instead of the detector 16, it has a timer 17 that produces regular override signals for the switch 15 so as to force the generation of I-frames at 1 or 0.5 second intervals. An alternative way to enforce a minimum time between I-frames is to force the generation of an I-frame whenever 1 second (or the relevant desired period) has elapsed since the previous I-frame.

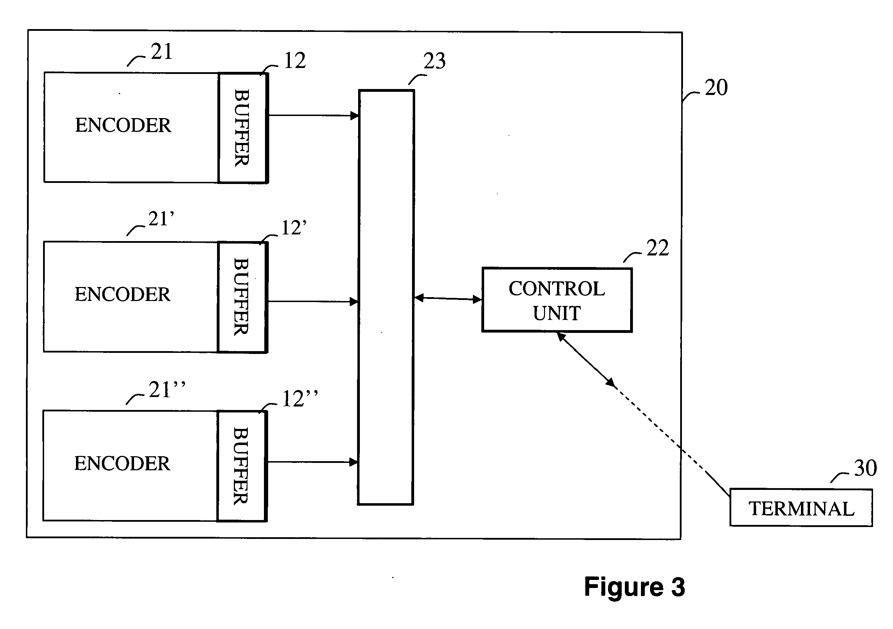

Figure 3 shows a server 20 for streaming video to client terminals only one 30 of which is shown. The source video is encoded by a free mode coder 21, having the structure of Figure 1 and a fixed mode coder 21' having the structure of Figure 2, thereby producing two encodings of the video (one with a fixed GOP structure and one with a free GOP structure related only to the scene changes in the video) which are stored or buffered in the buffers 12, 12' respectively. Alternatively a single coder (having both the detector 16 and the timer 17 and switchable between the two modes) could be used to perform the two codings twice in succession in the two different modes, in that case the buffers need to be large enough to accommodate the whole sequence. A third buffer 12" is optionally provided for storage of one or more trick-play encoded versions of the same video sequence. These could be generated by selection of I-frames from the buffer 12', or by providing a third coder.

A control unit 22 serves to receive user commands from a client terminal 30 for streaming video, so that the user can initiate streaming and switch between these encodings as appropriate for full random access functionality. In a no trickplay scenario the user would press "play", triggering a command to the control unit 22 to initiate streaming from the beginning of the free mode content from the buffer 12 and watch the content straight through. In this case he will see only the free GOP structure video (i.e. no (or very much reduced) beating or artifacting, possible lower bitrate overall for same quality). When the client terminal sends a command for trickplay then this triggers instead the streaming of a trick-play encoding from the buffer 12"- fast forward/rewind mode as specified in the command. The user would see the trickmode. When the client terminal sees a command to terminate trickplay and revert to normal play, the control unit:
(a) terminates streaming of the trickplay encoding;
(b) then switches in to the regular GOP coded video from the buffer 12' -but he would only stay in this stream for as long as required till he reaches the frame that corresponds to the next available sync frame (intra) in the free GOP video in the buffer 12, so that the artifacts referred to occur for only a short period after the return from trickmode.
(c) thus, when this point is reached, the control unit ceases streaming of the fixed-GOP encoding from the buffer 12' and initiates streaming from the buffer 12.

The sync frame locations need to be determined and available to the control unit prior to streaming. One means of doing this is to parse the resulting encoded bitstreams and record the sync point locations in a separate index file. Some container formats (e.g. MP4 files) also store this information in a particular table. The MP4 file header has a stss (sample table sync samples) header structure.

In the free-mode coder 21, it is statistically probable (highly likely in a movie with typical scene durations of 8 seconds or less often quoted) that the scene change detector will trigger at least one sync frame every 10 seconds or so.; if desired, however, a counter 18 (shown dotted in Figure 1) could be added to ensure this. The counter is reset to zero upon every scene-change recognition. If however its count exceeds 10 seconds then this also overrides the switch 15 to generate an I-frame.

Note that the coders of Figures 1 and 2 could be implemented if desired by H.264 coders. Many commercially available coders can support appropriate settings; for example, those manufactured by Ateme SA of Bièvres, France can either be set to used fixed GOP size or a minimum and maximum GOP size. Free mode operation with the above-mentioned 10 second ceiling could be obtained by setting the maximum GOP size to 10. Fixed mode with a 1 second rate would require setting the fixed GOP size to 1 second.

Normally, the transition from trick-play to free mode is via a short period of streaming of fixed mode video. If desired, however, it would be possible, upon receipt of a command to terminate trick-play and revert to normal play, firstly to determine whether a sync frame was imminently available in the free mode encoding and in such event to switch directly to it, omitting the streaming of the fixed mode encoding. Typically the criterion for invoking this option would be if the time interval to the next free-mode I-frame is less than or equal to the minimum time between sync frames in the fixed mode encoding (or maybe 1.5 time this figure).

A second embodiment of the invention, not involving the use of a fixed mode stream, involves switching directly to the free mode steam following trick play. In this case the timing discontinuity is dealt with by providing that, in the case of fast forward play, the play jumps back to the nearest sync frame, or in the case of reverse trick play, jumps forward to the nearest sync frame in the destination free-mode encoding. In a more sophisticated implementation one might permit, upon exit from fast-forward, a small forward jump. An algorithm for this might provide that, if there is a sync frame in the destination stream within a set period of x frames after the exit point of the trick play steam, that sync frame is chosen, otherwise the free mode stream is entered at the nearest sync frame before that exit point. The value of x would probably be not more than a second and if the fast forward frame rate is N times the rate for normal play ten x might typically be equal to N or 2N.

## Claims

1. A method of streaming video source material comprising
generating from said video source material a first coded signal using a combination of inter-frame and intra-frame coding, the first signal having intra-coded pictures interspersed by inter-coded pictures, with the intra-coded pictures being forced to occur at least once in each of successive first set time periods of predetermined duration;
generating from said video source material a second coded signal using a combination of inter-frame and intra-frame coding, the second signal having intra-coded pictures interspersed by inter-coded pictures, with the intra-coded pictures occurring wholly or mainly at times determined by recognition of scene changes in the video source material; in response to a command for streaming, or resumption of streaming, of said video source material:
(a) streaming the first coded signal, commencing with an intra-coded picture;
(b) at a point coinciding with an intra-coded picture of the second coded signal, ceasing streaming of the first coded signal and instead streaming the second coded signal, commencing with that intra-coded picture.

2. A method according to claim 1 in which, in the first coded signal, the intra-coded pictures are forced to occur regularly in accordance with said first set time periods.

3. A method according to claim 1 or 2 in which the first set period is 1 second or less.

4. A method according to claim 1, 2 or 3 in which, in the second signal, the intra-coded pictures occur only at (a) times determined by recognition of scene changes in the video source material and (b) in the event that a scene change is not recognised during second set time period from the previous intra-coded frame, the second set time period being of duration longer that that of the first set time period.

5. A method according to claim 4 in which the second set period is at least 5 times the first set period.

6. A method according to claim 5 in which the second set period is at least 8 times the first set period.

7. A method according to claim 4, 5 or 6 in which the second set period is at least 5 seconds.

8. A method according to any one of the preceding claims further comprising, prior to receipt of said command for streaming, or resumption of streaming, of said video source material:
generating from said video source material a third coded signal for trick-play;
streaming the second coded signal; and
in response to a trick-play command, streaming said third coded signal instead of
the second coded signal;
and upon receipt of said command for streaming, or resumption of streaming, of said video source material, ceasing streaming of said third coded signal.

9. A method according to any one of the preceding claims, in which the streaming of the first coded signal at step (a) is conditional upon there being no intra-coded picture in the second coded signal within a third set time period.

10. A method of streaming video source material comprising
generating from said video source material a normal-play coded signal using a combination of inter-frame and intra-frame coding, the second signal having intra-coded pictures interspersed by inter-coded pictures, with the intra-coded pictures occurring wholly or mainly at times determined by recognition of scene changes in the video source material;
generating from said video source material a further coded signal for trick-play; in response to a trick-play command, streaming said further coded signal instead of the second coded signal, streaming the normal-play coded signal, commencing with an intra-coded picture;
wherein in the case that the trick-play is a forward play mode, the streaming of the normal-play coded picture commences with the latest intra-coded picture that is earlier than the last trick play picture, and in the case that the trick-play is a reverse play mode, the streaming of the normal-play coded picture commences with the earliest intra-coded picture that is later that the last trick play picture
